# EUROPÄISCHE PATENTSCHRIFT

(11) **EP 1 247 842 B1**
(45) Veröffentlichungstag und Bekanntmachung des Hinweises auf die Patenterteilung: **21.05.2008**
(21) Anmeldenummer: 02013596.8
(22) Anmeldetag: 14.11.1996
(51) Int. Cl.: C09B 67/00, D06P 1/382, D06P 3/10, C09B 62/44

(54) **Faserreaktive Anthrachinonfarbstoffe, deren Herstellung und deren Verwendung**
Fiber-reactive anthraquinone dyes, their preparation and use
Colorants anthraquinoniques réactifs sur la fibre, leur préparation et leur utilisation

(30) Priorität: 23.11.1995 CH 331595
(43) Veröffentlichungstag der Anmeldung: 09.10.2002
(62) Teilanmeldung aus: 96810797.9
(73) Patentinhaber: Huntsman Advanced Materials (Switzerland) GmbH, 4057 Basel (CH)
(72) Erfinder: Lehmann, Urs, 4057 Basel (CH); Frick, Marcel, 4153 Reinach (CH); Hannemann, Klaus, 79540 Lörrach (DE)

(56) Entgegenhaltungen:
- EP-A- 0 501 252
- EP-A- 0 708 150
- EP-B- 0 070 807
- JP-A- 50 157 422
- US-A- 4 754 023
- US-A- 4 786 721
- US-A- 4 876 334
- US-A- 5 256 774

## Beschreibung

Die vorliegende Erfindung betrifft faserreaktive Anthrachinonfarbstoffe, deren Herstellung und deren Verwendung in einem Verfahren zum Färben oder Bedrucken von natürlichen oder synthetischen Polyamidfasermaterialienn.

Faserreaktive Antrachinonfarbstoffe sind u.a. aus den Dokumenten EP-B-0 070 807, US-A-4 754 023, JP 50 157422 A, US-A-4 786 721, EP-A-0 501 252, US-A-4 876 334, US-A-5 256 774 und EP-A-0 708 150 bekannt. EP-B-0 070 807 offenbart z.B. Antrachinonfarbstoffe, die für das bedrucken von stickstoffhaltigen Fasern, wie Wolle oder Seide, geeignet sind.

Gegenstand der vorliegenden Erfindung sind faserreaktive Anthrachinonfarbstoffe der Formel 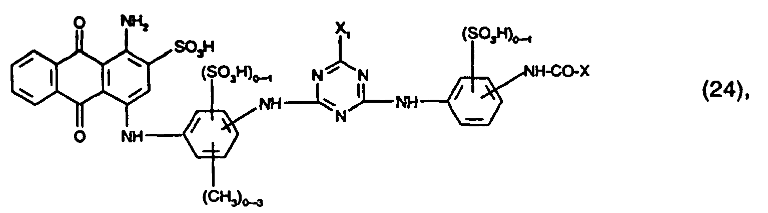 worin
X₁ Chlor ist und
X der Rest 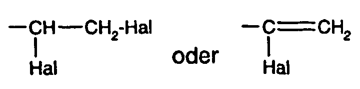 und Hal Brom oder Chlor ist,
und der Farbstoff der Formel (24) insgeamt zwei Sulfogruppen enthält, 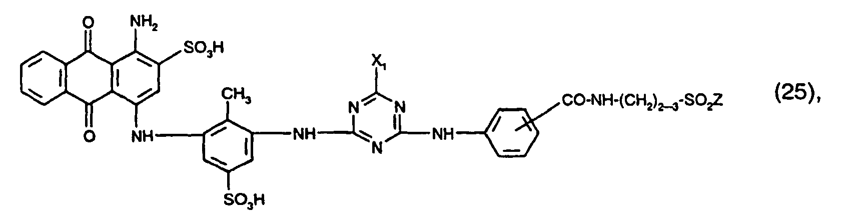 worin X₁ Chlor ist und
Z der Rest -CH=CH₂ oder -CH₂-CH₂-Y und Y -Cl, -OSO₃H oder -OCO-CH₃ ist, und 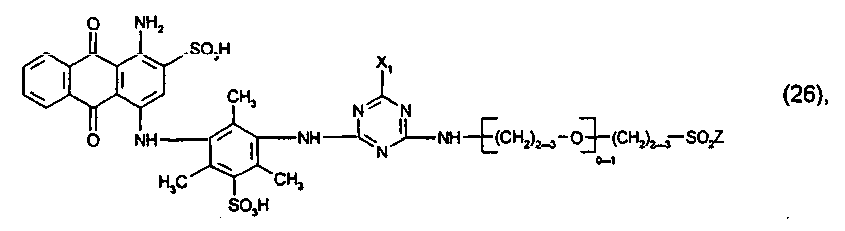 worin X₁ Chlor ist und
Z der Rest -CH=CH₂ oder -CH₂-CH₂-Y und Y -Cl, -OSO₃H oder -OCO-CH₃ ist.

Hal ist bevorzugt Brom.

Bei dem Rest Y handelt es sich bevorzugt um -Cl oder insbesondere -OSO₃H.

Bevorzugt sind Farbstoffe der Formel (26) oder insbesondere der Formel (24).

Gegenstand der vorliegenden Erfindung sind ferner Verfahren zur Herstellung der Farbstoffe der Formeln (24) bis (26).

Das Verfahren zur Herstellung der Farbstoffe der Formel (24) ist dadurch gekennzeichnet, dass man Verbindungen der Formeln 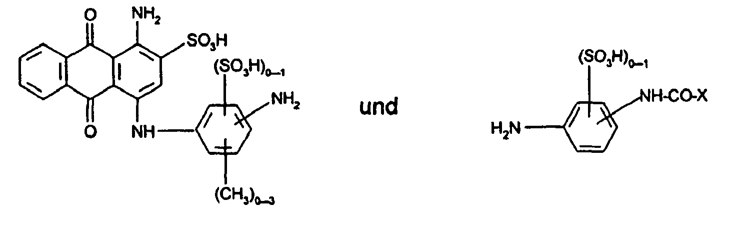 mit Cyanurfluorid oder Cyanurchlorid umsetzt.

Das Verfahren zur Herstellung der Farbstoffe der Formel (25) ist dadurch gekennzeichnet, dass man Verbindungen der Formeln 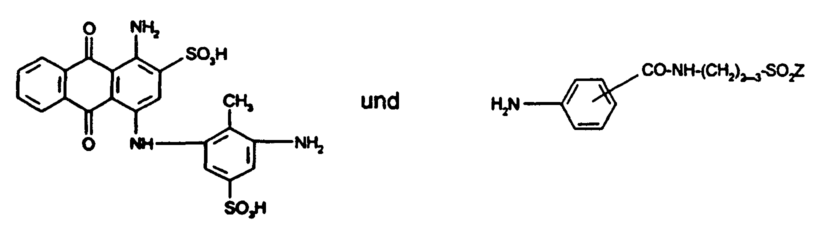 mit oder Cyanurchlorid umsetzt.

Das Verfahren zur Herstellung der Farbstoffe der Formel (26) ist dadurch gekennzeichnet, dass man Verbindungen der Formeln 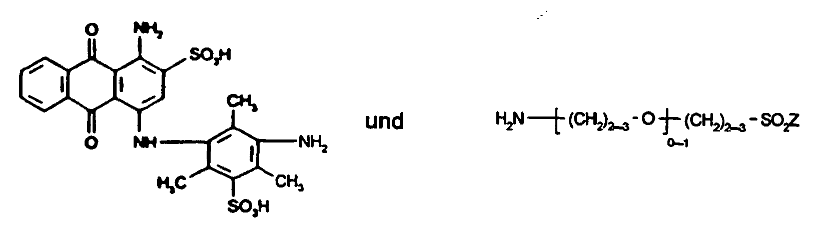 mit Cyanurchlorid umsetzt.

Da die einzelnen oben angegebenen Verfahrensschritte in unterschiedlicher Reihenfolge, gegebenenfalls auch gleichzeitig, ausgeführt werden können, sind verschiedene Verfahrensvarianten möglich. Im allgemeinen führt man die Umsetzung schrittweise durch, wobei sich die Reihenfolge der einfachen Reaktionen zwischen den einzelnen Reaktionskomponenten vorteilhafterweise nach den besonderen Bedingungen richtet. So wird z.B. die Anthrachinonverbindung mit Cyanurhalogenid umgesetzt und das erhaltene Produkt anschliessend mit dem Amin kondensiert. Ferner kann das Amin mit Cyanurhalogenid umgesetzt und das erhaltene Produkt anschliessend mit der Anthrachinonverbindung kondensiert werden.

Die einzelnen Kondensationsreaktionen erfolgen z.B. gemäss an sich bekannter Verfahren, in der Regel in wässriger Lösung, bei einer Temperatur von z.B. 0 bis 50°C, insbesondere 0 bis 10°C, und einem pH-Wert von z.B. 3 bis 10, insbesondere 3 bis 8.

Ausserdem können im Anschluss an die Synthese Umwandlungsreaktionen ausgeführt werden. Beispielsweise kann man die Anthrachinonfarbstoffe, welche Sulfatoäthylsulfonylreste oder α,β-Dihalogenpropionylaminoreste enthalten, mit einer Base, wie z.B. Natriumhydroxid, behandeln, wobei die Sulfatoäthylsulfonylreste in Vinylsulfonylreste und die α-β-Dihalogenpropionylaminoreste in α-Halogenacryloylaminoreste übergehen.

Die erfindungsgemässen Anthrachinonfarbstoffe der Formeln (24) bis (26) liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die erfindungsgemässen Anthrachinonfarbstoffe der Formeln (24) bis (26) können weitere Zusätze wie z.B. Kochsalz oder Dextrin enthalten.

Die erfindungsgemässen Anthrachinonfarbstoffe der Formeln (24) bis (26) können auf die üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Die Mengen, in denen die einzelnen Farbstoffe in den Färbebädern oder Druckpasten verwendet werden, können je nach der gewünschten Farbtiefe in weiten Grenzen schwanken, im allgemeinen haben sich Mengen von 0,01 bis 15 Gew.-%, insbesondere 0,1 bis 10 Gew.-%, bezogen auf das Färbegut bzw. die Druckpaste, als vorteilhaft erwiesen.

Bevorzugt ist das Färben, welches insbesondere nach dem Ausziehverfahren erfolgt.

Vorzugsweise färbt man bei einem pH-Wert von 3 bis 7, insbesondere 4 bis 6. Das Flottenverhältnis kann innerhalb eines weiten Bereichs gewählt werden, z.B. von 1:5 bis 1:50, vorzugsweise 1:5 bis 1:30. Vorzugsweise färbt man bei einer Temperatur von 70 bis 110°C, insbesondere 80 bis 105°C.

Zur Erhöhung der Nassechtheiten kann, zur Entfernung von allfällig nicht fixierten Farbstoffs, eine Nachbehandlung bei einem pH-Wert von z.B. 8 bis 9 und einer Temperatur von z.B. 75 bis 85°C durchgeführt werden.

Die erfindungsgemässen Anthrachinonfarbstoffe der Formeln (24) bis (26) zeichnen sich beim Di- oder Trichromie-Färben oder -Bedrucken durch gleichmässigen Farbaufbau, gutes Aufzieh- und Fixierverhalten, gute Nuancenkonstanz auch in verschiedenen Konzentrationen, gute Echtheiten sowie insbesondere durch sehr gute Kombinierbarkeit aus.

Die erfindungsgemässen Anthrachinonfarbstoffe der Formeln (24) bis (26) eignen sich zum Färben oder Bedrucken sowohl von natürlichen Polyamidfasermaterialien wie z.B. Wolle, wie auch von synthetischen Polyamidfasermaterialien, wie z.B. Polyamid 6 oder Polyamid 6.6, und sind geeignet zum Färben oder Bedrucken von Woll- und synthetischem Polyamid-Mischgeweben oder -Garnen. Bevorzugt ist das Färben oder Bedrucken von natürlichen Polyamidfasermaterialien, insbesondere von Wolle und vorzugsweise von waschmaschinenfest-ausgerüsteter Wolle.

Das genannte Textilmaterial kann dabei in den verschiedensten Verarbeitungsformen vorliegen, wie z.B. als Faser, Garn, Gewebe oder Gewirke und insbesondere in Form von Teppichen.

Es werden egale Färbungen mit guten Allgemeinechtheiten, insbesondere guter Reib-, Nass-, Nassreib- und Lichtechtheit erhalten.

In den folgenden Beispielen stehen Teile für Gewichtsteile. Die Temperaturen sind Celsiusgrade. Die Beziehung zwischen Gewichtsteilen und volumenteilen ist dieselbe wie diejenige zwischen Gramm und Kubikzentimeter.

### Herstellungsbeispiel 1:

a) 4,7 Teile Cyanurchlorid werden innerhalb von 10 bis 15 Minuten bei einer Temperatur von 0 bis 2°C in 47 Teilen Eis, 23 Teilen Wasser und 0,025 Teilen Na₂HPO₄·12H₂O suspendiert. Anschliessend wird innerhalb von 45 Minuten bei einer Temperatur von 0 bis 2°C eine Lösung von 13 Teilen einer Verbindung der Formel 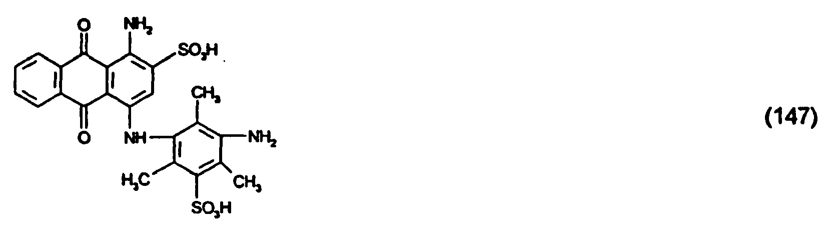 in 150 Teilen Wasser und 18,1 Teilen einer wässrigen, 2-normalen Natriumhydroxidlösung zudosiert, wobei der pH durch Zugabe wässriger, 2-normaler Natriumhydroxidlösung bei einem Wert von 5 gehalten wird. Es wird 40 Minuten bei einer Temperatur von 0 bis 2°C nachgerührt. Man erhält eine Lösung, welche die in Form der freien Säure angegebene Verbindung der Formel 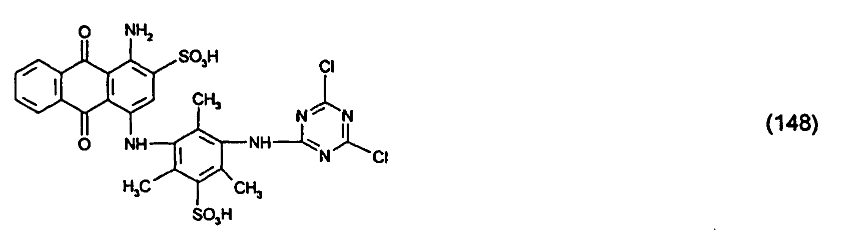 enthält.
b) 8,5 Teile einer Verbindung der Formel 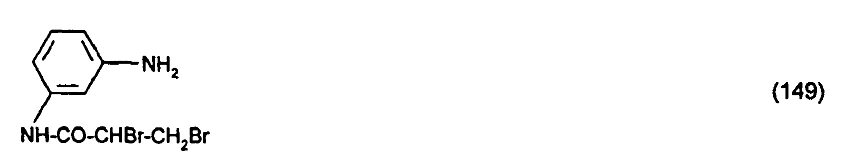 werden in 40 Teilen Wasser und 100 Teilen Aceton gelöst. Die so erhaltene Lösung lässt man innerhalb von 45 Minuten zu der gemäss a) erhaltenen, auf eine Temperatur von 0 bis 2°C abgekühlten Lösung tropfen. Während der Zugabe wird der pH mittels wässriger, 2-normaler Natriumhydroxidlösung bei einem Wert von 6 gehalten. Es wird über Nacht bei einer Temperatur von 0 bis 2°C und einem pH-Wert von 6 nachgerührt. Nach Zugabe von Natriumchlorid wird eine Stunde im Eisbad nachgerührt, der Farbstoff abfiltriert, mit wässriger Natriumchloridlösung gewaschen und bei einer Temperatur von 40°C getrocknet. Man erhält einen Farbstoff, welcher in Form der freien Säure der Verbindung der Formel 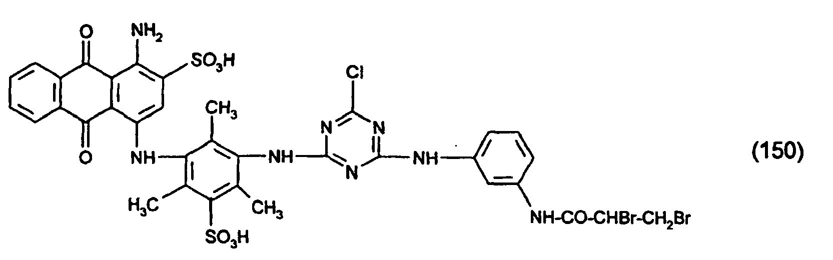 entspricht. Der Farbstoff der Formel (150) färbt Wolle und synthetisches Polyamidfasermaterial in blauen Farbtönen.

Herstellungsbeispiele 2 bis 8: In analoger Weise zu den Angaben in Herstellungsbeispiel 1 können die in der folgenden Tabelle 3 in Spalte 2 in Form der freien Säure angegebenen Farbstoffe erhalten werden. Gegebenenfalls wird die zweite Kondensation bei Raumtemperatur ausgeführt. Die in der folgenden Tabelle angegebenen Farbstoffe färben Wolle und synthetisches Polyamidfasermaterial in blauen Farbtönen.

**Tabelle 3**

| Herstellungsbeispiel | Farbstoff |
|---|---|
| **2** | 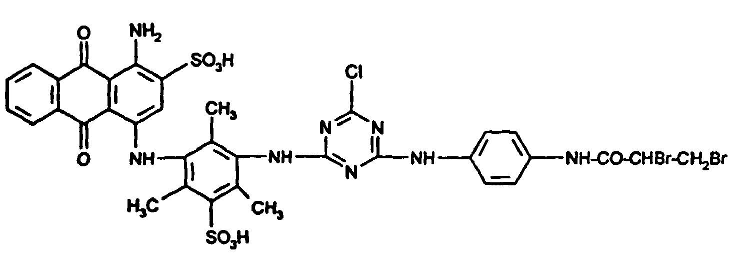 |
| **3** | 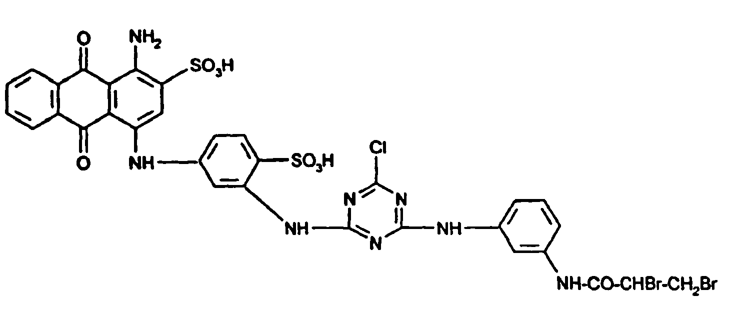 |
| **4** | 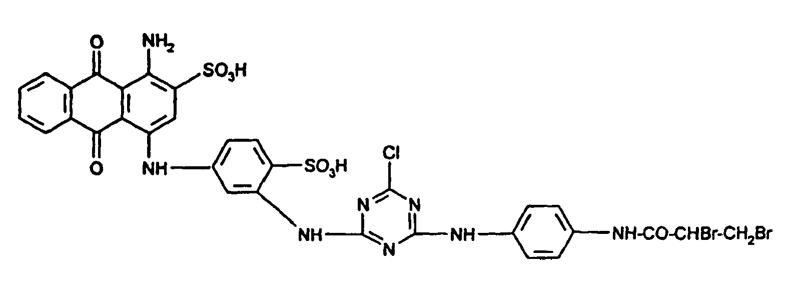 |
| **5** | 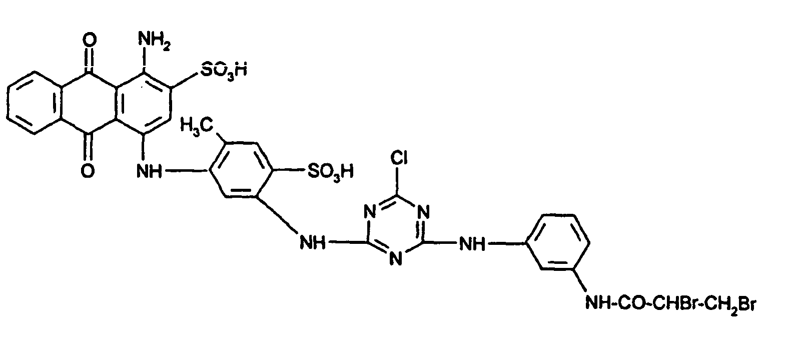 |
| **6** | 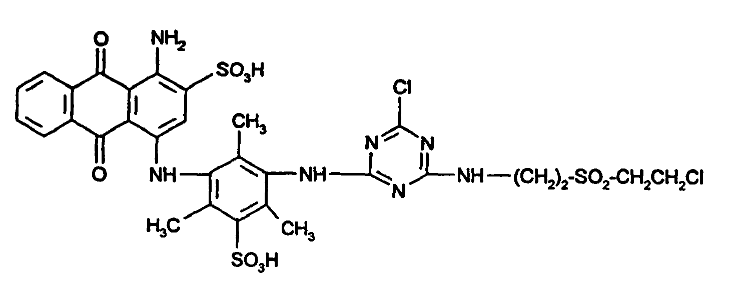 |
| **7** | 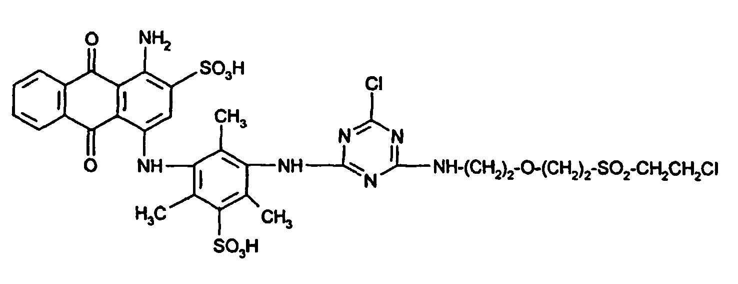 |
| **8** | 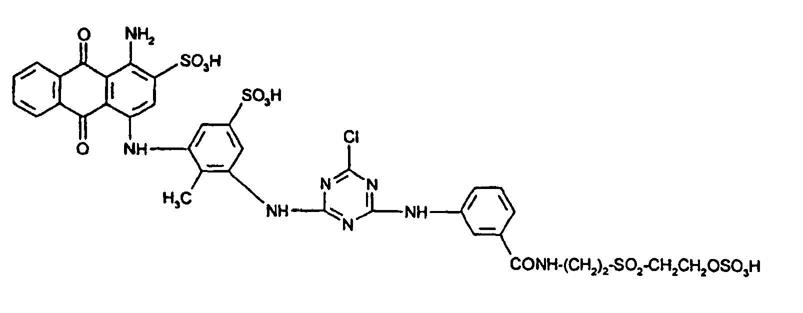 |

Herstellungsbeispiel 9: 11,25 Teile des gemäss Beispiel 1 erhältlichen Farbstoffs werden in 150 Teilen Wasser bei Raumtemperatur und einem pH-Wert von 3,05 gelöst. Anschliessend wird auf eine Temperatur von 60°C erwärmt, der pH wird durch Zugabe einer wässrigen, 1-normalen Natriumhydroxidlösung bei einem Wert von 7,5 gehalten und es wird insgesamt 5 Stunden unter diesen Bedingungen acryliert. Anschliessend wird auf Raumtemperatur abgekühlt, nach Zugabe von Natriumchlorid 2 Stunden nachgerührt, der erhaltene Farbstoff abfiltriert, dieser mit einer 10%-igen, wässrigen Natriumchloridlösung nachgewaschen und bei einer Temperatur von 40°C getrocknet. Man erhält einen Farbstoff, welcher in Form der freien Säure der Verbindung der Formel 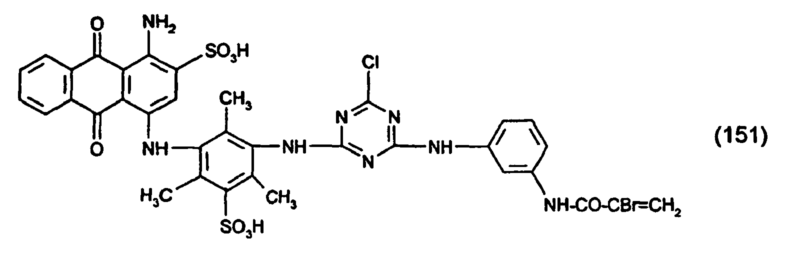 entspricht. Der Farbstoff der Formel (151) färbt Wolle und synthetisches Polyamidfasermaterial in blauen Farbtönen.

Herstellungsbeispiele 10 bis 15: In analoger Weise zu den Angaben in Herstellungsbeispiel 9 können die in der folgenden Tabelle 4 in Spalte 2 in Form der freien Säure angegebenen Farbstoffe erhalten werden, welche Wolle und synthetisches Polyamidfasermaterial in blauen Farbtönen färben. Falls die Farbstoffe keinen Rest der Formel -NH-CO-CBr=CH₂ enthalten erfolgt die Vinylierung bei einem pH-Wert von 8 bis 10.

**Tabelle 4**

| Herstellungsbeispiel | Farbstoff |
|---|---|
| 10 | 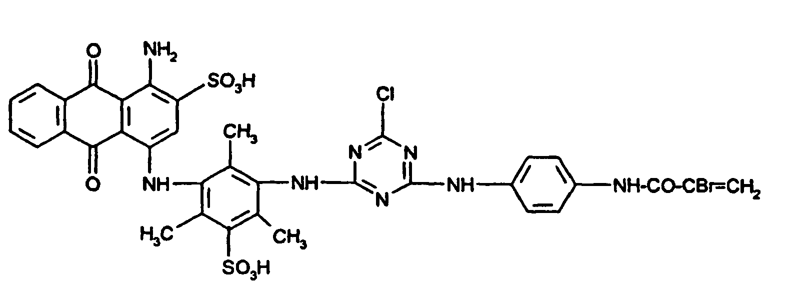 |
| 11 | 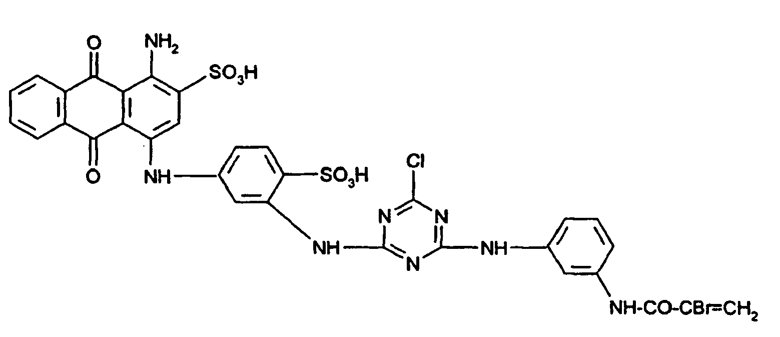 |
| 12 | 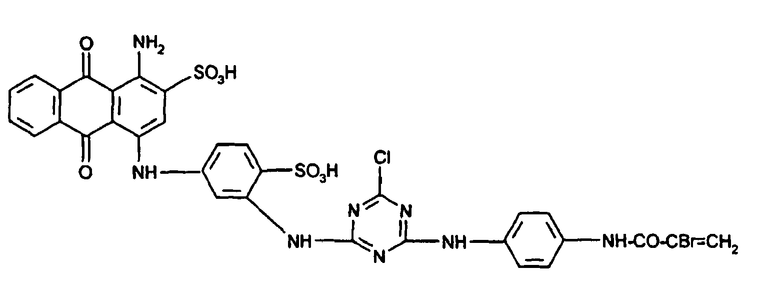 |

| | |
|---|---|
| 13 | 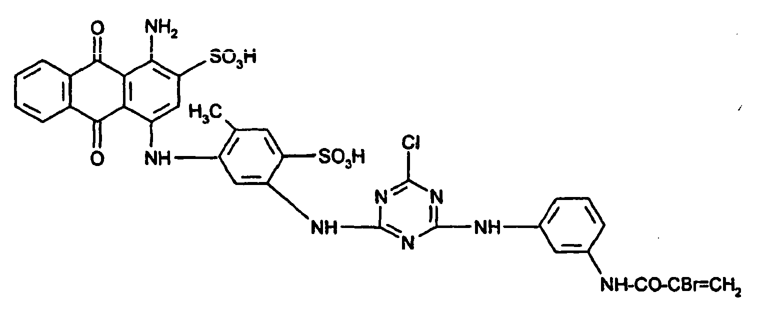 |
| 14 | 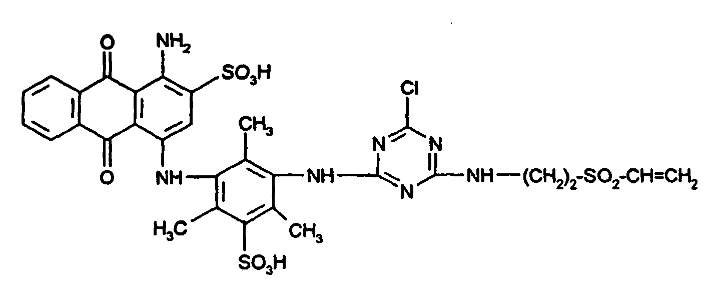 |
| 15 | 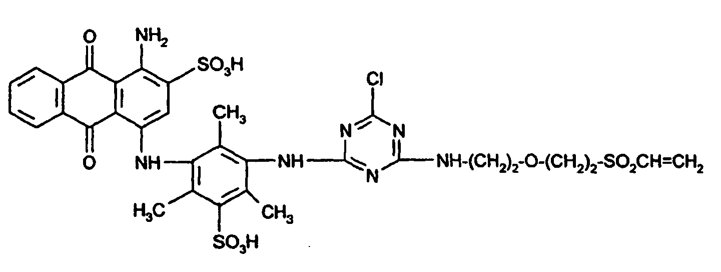 |

Erläuterungsbeispiel: Es werden 0,57 Teile des gelbfärbenden Farbstoffs der Formel 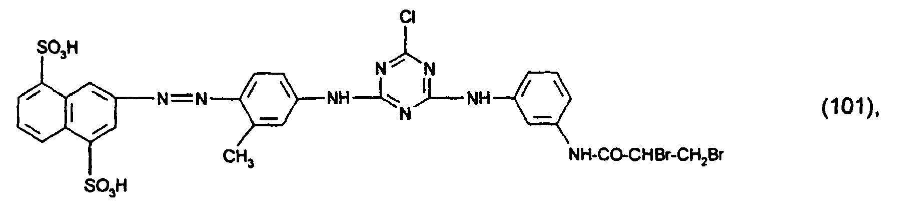 0,53 Teile des rotfärbenden Farbstoffs der Formel 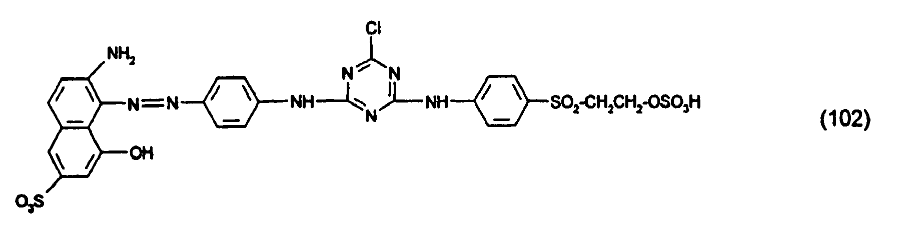 und 0,65 Teile des blaufärbenden Farbstoffs der Formel 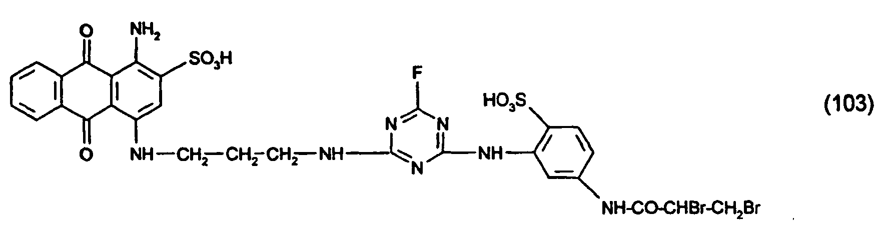 in 200 Teilen Wasser gelöst und 0,5 Teile Natriumsulfat, 0,1 Teile eines Egalisierhilfsmittels (basierend auf dem Kondensationsprodukt aus einem höheren aliphatischen Amin und Ethylenoxid) sowie 0,5 Teile Natriumacetat zugegeben. Dann wird der pH mit Essigsäure (80%) auf einen Wert von 5,5 gestellt. Das Färbebad wird 10 Minuten auf 50°C erwärmt und es werden dann 10 Teile eines Wollgewebes zugegeben. Man erwärmt innerhalb von ca. 50 Minuten auf eine Temperatur von 100°C und färbt 60 Minuten bei dieser Temperatur. Danach lässt man auf 90°C abkühlen und entnimmt das Färbegut. Das Wollgewebe wird mit warmem und kaltem Wasser gewaschen, anschliessend geschleudert und getrocknet. Man erhält eine braune Färbung, die gute Licht- und Nassechtheiten sowie eine gute Faseregalität aufweist.

Beispiele 1 bis 12: Verfährt man wie im Erläuterungsbeispiel angegeben, verwendet jedoch anstelle von 0,57 Teilen des gelbfärbenden Farbstoffs der Formel (101), 0,53 Teilen des rotfärbenden Farbstoffs der Formel (102) und 0,65 Teilen des blaufärbenden Farbstoffs der Formel (103) die in der folgenden Tabelle 1 in Spalte 2 angegebenen Farbstoffe in den dort angegebenen Mengen, so werden ebenfalls braune Färbungen erhalten.

**Tabelle 1**

| | |
|---|---|
| Bsp. | Farbstoffe |
| 1 | 0,53 Teile des rotfärbenden Farbstoffs der Formel (102), |
| | 0,73 Teile des blaufärbenden Farbstoffs der Formel |
| | 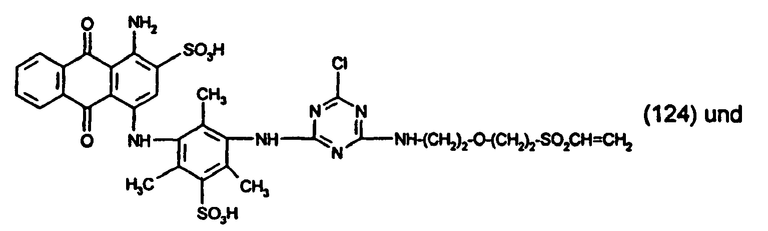 |
| | 0,53 Teile des gelbfärbenden Farbstoffs der Formel |
| | 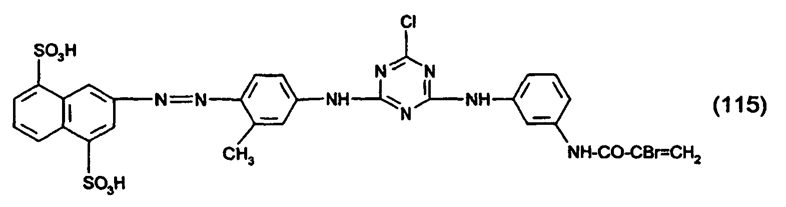 |
| 2 | 0,53 Teile des rotfärbenden Farbstoffs der Formel (102), |
| | 0,73 Teile des blaufärbenden Farbstoffs der Formel (124) und |
| | 0,47 Teile des gelbfärbenden Farbstoffs der Formel |
| | 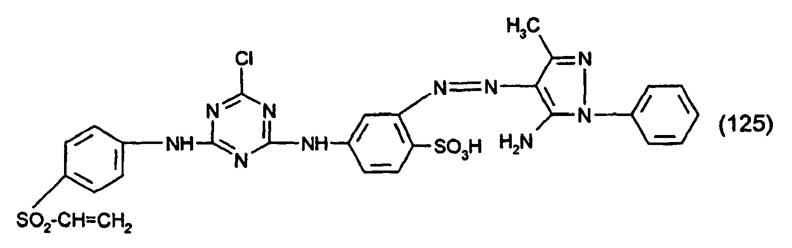 |
| 3 | 0,53 Teile des rotfärbenden Farbstoffs der Formel (102), |
| | 0,73 Teile des blaufärbenden Farbstoffs der Formel (124) und |
| | 0,5 Teile des gelbfärbenden Farbstoffs der Formel |
| | 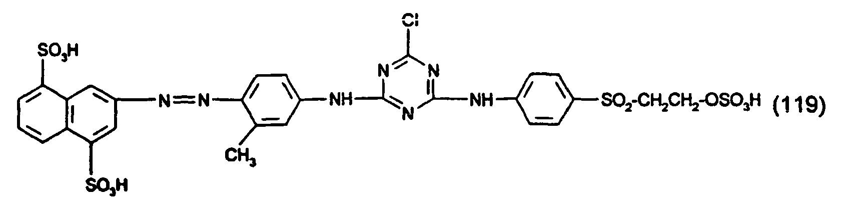 |
| 4 | 0,53 Teile des rotfärbenden Farbstoffs der Formel (102), |
| | 0,73 Teile des blaufärbenden Farbstoffs der Formel (124) und |
| | 0,4 Teile des gelbfärbenden Farbstoffs der Formel |
| | 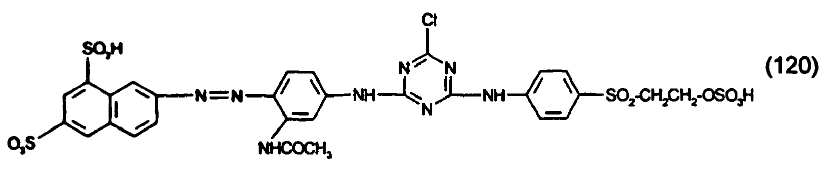 |
| 5 | 0,53 Teile des rotfärbenden Farbstoffs der Formel (102), |
| | 0,73 Teile des blaufärbenden Farbstoffs der Formel (124) und |
| | 0,53 Teile des gelbfärbenden Farbstoffs der Formel (101) |
| 6 | 0,53 Teile des rotfärbenden Farbstoffs der Formel (102), |
| | 0,63 Teile des blaufärbenden Farbstoffs der Formel |
| | 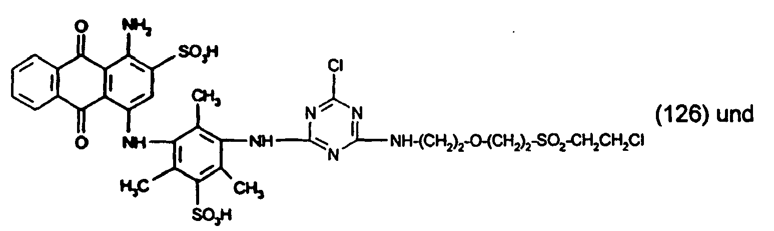 |
| | 0,6 Teile des gelbfärbenden Farbstoffs der Formel |
| | 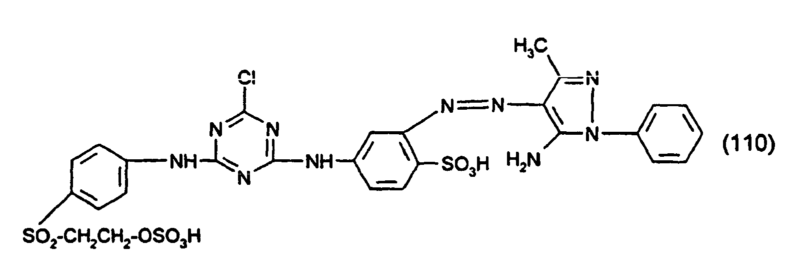 |
| 7 | 0,53 Teile des rotfärbenden Farbstoffs der Formel (102), |
| | 0,63 Teile des blaufärbenden Farbstoffs der Formel (126) und |
| | 0,47 Teile des gelbfärbenden Farbstoffs der Formel |
| | 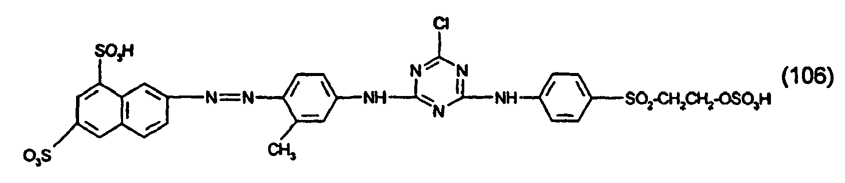 |
| 8 | 0,53 Teile des rotfärbenden Farbstoffs der Formel |
| | 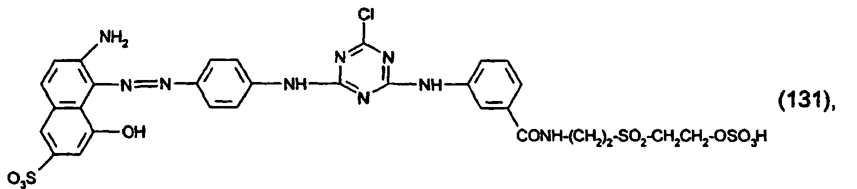 |
| | 0,73 Teile des blaufärbenden Farbstoffs der Formel (124) und |
| | 0,4 Teile des gelbfärbenden Farbstoffs der Formel (120) |
| 9 | 0,52 Teile des rotfärbenden Farbstoffs der Formel |
| | 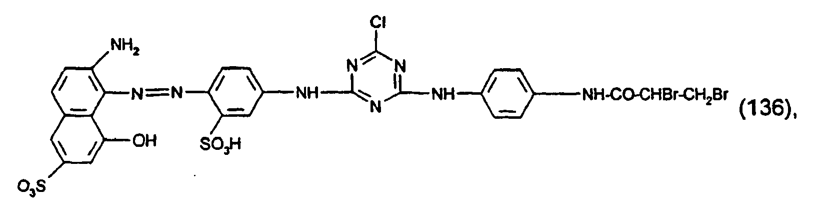 |
| | 0,63 Teile des blaufärbenden Farbstoffs der Formel |
| | 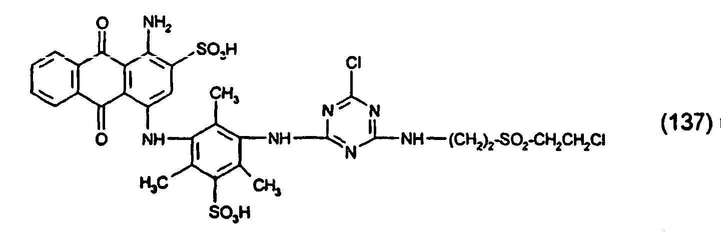 und |
| | 0,7 Teile des gelbfärbenden Farbstoffs der Formel |
| | 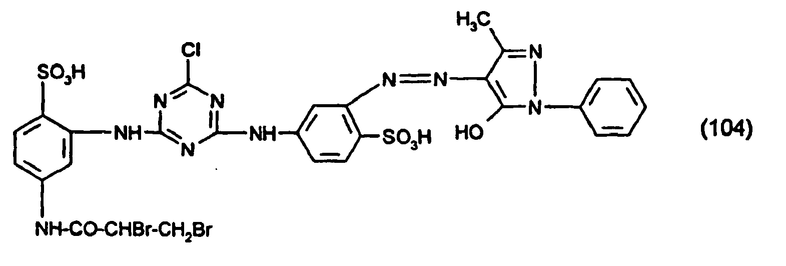 |
| 10 | 0,52 Teile des rotfärbenden Farbstoffs der Formel (136), |
| | 0,73 Teile des blaufärbenden Farbstoffs der Formel (124) und |
| | 0,53 Teile des gelbfärbenden Farbstoffs der Formel (101) |
| 11 | 0,53 Teile des rotfärbenden Farbstoffs der Formel |
| | 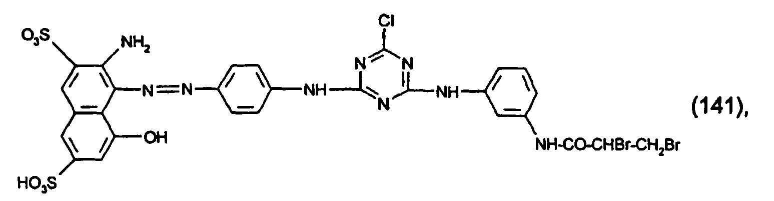 |
| | 0,73 Teile des blaufärbenden Farbstoffs der Formel (124) und |
| | 0,53 Teile des gelbfärbenden Farbstoffs der Formel (115) |
| 12 | 0,48 Teile des rotfärbenden Farbstoffs der Formel |
| | 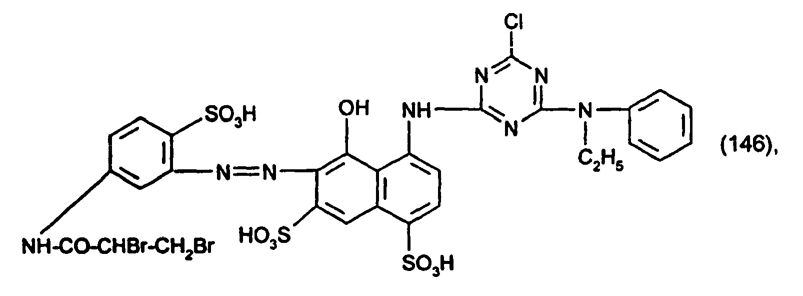 0,73 Teile des blaufärbenden Farbstoffs der Formel (124) und |
| | 0,53 Teile des gelbfärbenden Farbstoffs der Formel (115) |

Anstelle der in den obigen Beispielen 1 bis 12 angegebenen Kombination von drei Farbstoffen kann auch eine Kombination von nur zweien der in den jeweiligen Beispielen angegebenen Farbstoffe verwendet werden.

Beispiele 13 und 14: Verfährt man wie im Erläuterungsbeispiel angegeben, verwendet jedoch anstelle von 0,57 Teilen des gelbfärbenden Farbstoffs der Formel (101), 0,53 Teilen des rotfärbenden Farbstoffs der Formel (102) und 0,65 Teilen des blaufärbenden Farbstoffs der Formel (103) die in der folgenden Tabelle 2 in Spalte 2 angegebenen Farbstoffe in den dort angegebenen Mengen, so werden grüne Färbungen erhalten.

**Tabelle 2**

| Bsp. | Farbstoffe |
|---|---|
| 13 | 1,10 Teile des blaufärbenden Farbstoffs der Formel (124) und |
| | 1,4 Teile des gelbfärbenden Farbstoffs der Formel |
| | 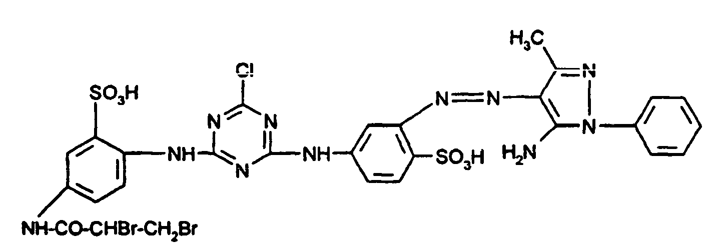 |
| 14 | 1,10 Teile des blaufärbenden Farbstoffs der Formel (124) und |
| | 1,3 Teile des gelbfärbenden Farbstoffs der Formel |
| | 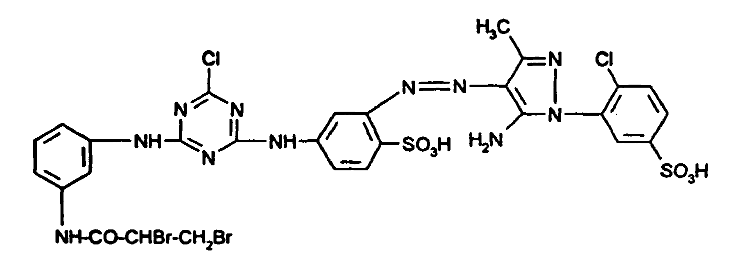 |

## Patentansprüche

1. Faserreaktive Anthrachinonfarbstoffe der Formel 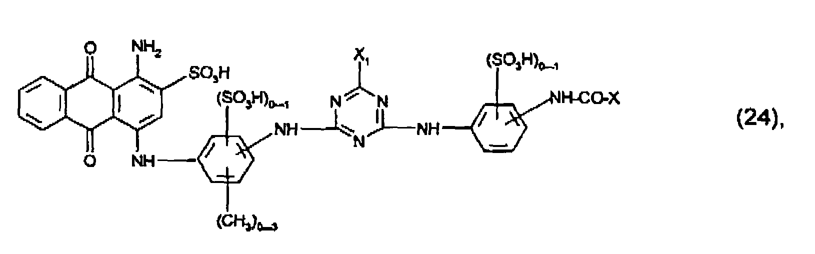 worin
X₁ Chlor ist und
X der Rest 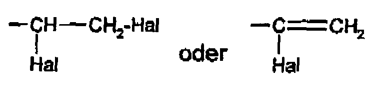 und Hal Brom oder Chlor ist,
und der Farbstoff der Formel (24) insgesamt zwei Sulfogruppen enthält, 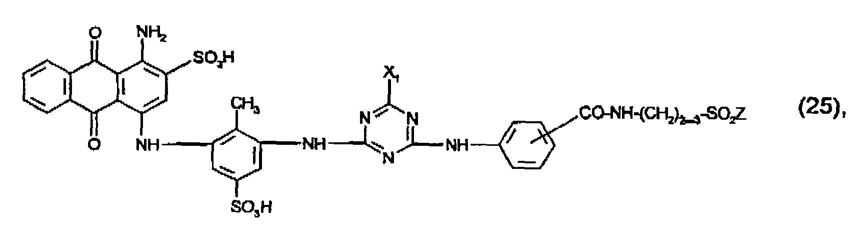 worin X₁ Chlor ist und
Z der Rest -CH=CH₂ oder -CH₂-CH₂-Y und Y -CI, -OSO₃H oder -OCO-CH₃ ist, und 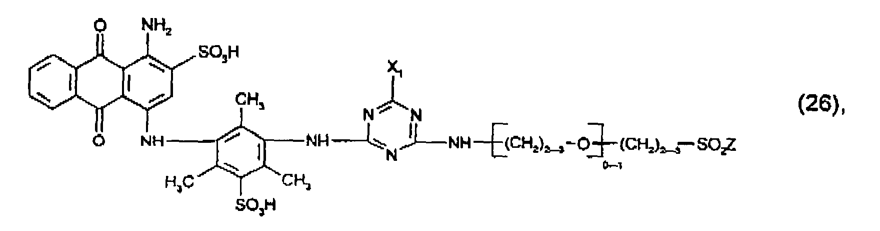 worin X₁ Chlor ist und
Z der Rest -CH=CH₂ oder -CH₂-CH₂-Y und Y Cl, -OSO₃H oder -OCO-CH₃ ist.

2. Anthrachinonfarbstoffe gemäss Anspruch 1 **dadurch gekennzeichnet, dass** Hal Brom ist.

3. Anthrachinonfarbstoffe gemäss Anspruch 1 order 2, **dadurch gekennzeichnet, dass**
Y -Cl oder -OSO₃H, insbesondere -OSO₃H, ist.

4. Verfahren zur Herstellung eines Farbstoffs der Formel (24), **dadurch gekennzeichnet, dass** man Verbindungen der Formeln 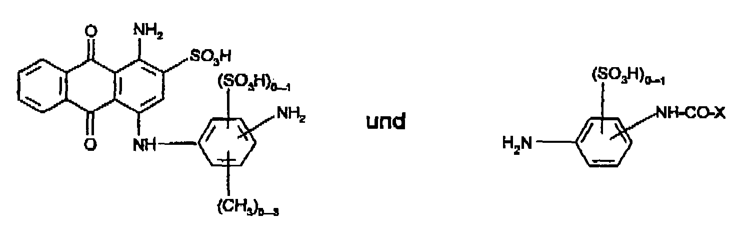 mit oder Cyanurchlorid umsetzt.

5. Verfahren zur Herstellung eines Farbstoffs der Formel (25), **dadurch gekennzeichnet, dass** man Verbindungen der Formeln 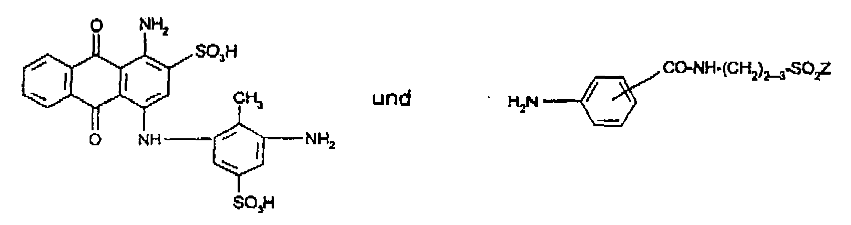 mit oder Cyanurchlorid umsetzt.

6. Verfahren zur Herstellung eines Farbstoffs der Formel (26), **dadurch gekennzeichnet, dass** man Verbindungen der Formeln 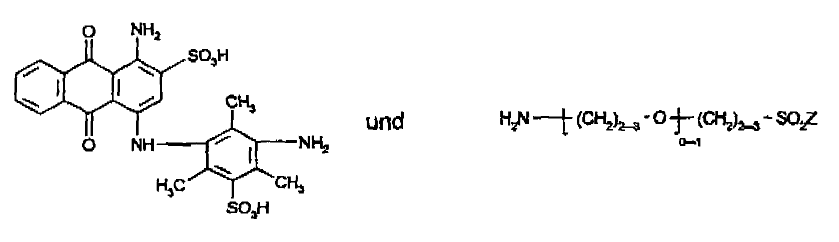 mit Cyanurchlorid umsetzt.

7. Verfahren zum Färben oder Bedrucken von natürlichen oder synthetischen Polyamidfasermaterialien, worin man einen Farbstoff der Formel (24), (25) oder (26) verwendet.

8. Verfahren gemäss Anspruch 7 zum Färben oder Bedrucken von natürlichen Polyamidfasermaterialien.

## Claims

1. Fibre-reactive anthraquinone dyes of the formula 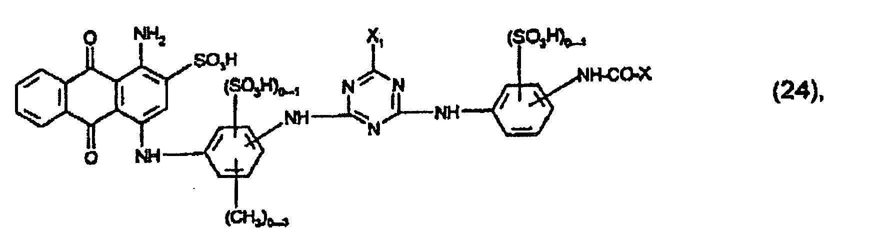 in which
X₁ is chlorine and
X is the radical 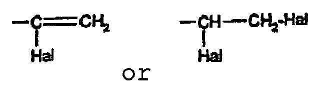 and Hal is bromine or chlorine,
and the dye of the formula (24) contains in total two sulpho groups, 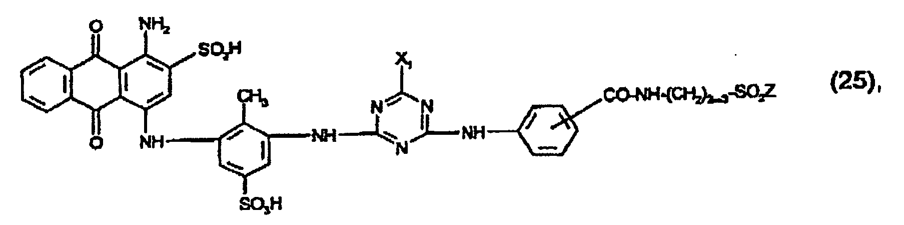 in which X₁ is chlorine and
Z is the radical -CH=CH₂ or -CH₂-CH₂-Y, and Y is -Cl, -OSO₃H or -OCO-CH₃, and 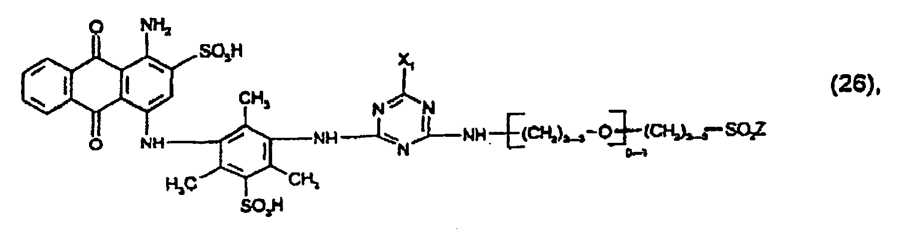 in which X₁ is chlorine and
Z is the radical -CH=CH₂ or -CH₂-CH₂-Y, and Y is -Cl, -OSO₃H or -OCO-CH₃.

2. Anthraquinone dyes according to Claim 1, **characterized in that** Hal is bromine.

3. Anthraquinone dyes according to Claim 1 or 2, **characterized in that** Y is -Cl or -OSO₃H, more particularly -OSO₃H.

4. Process for preparing a dye of the formula (24), **characterized in that** compounds of the formulae 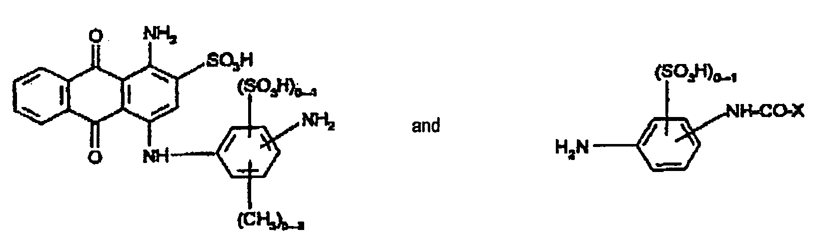 are reacted with cyanuric chloride.

5. Process for preparing a dye of the formula (25), **characterized in that** compounds of the formulae 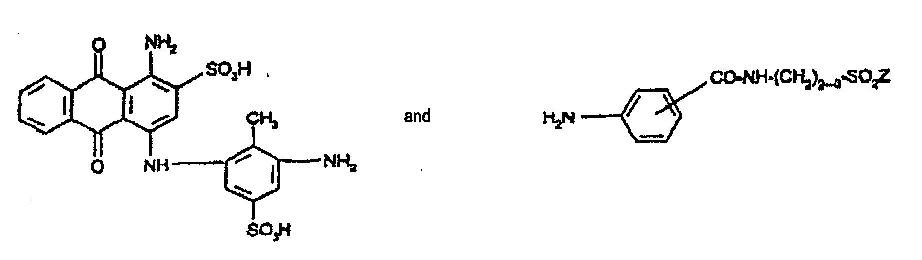 are reacted with cyanuric chloride.

6. Process for preparing a dye of the formula (26), **characterized in that** compounds of the formulae 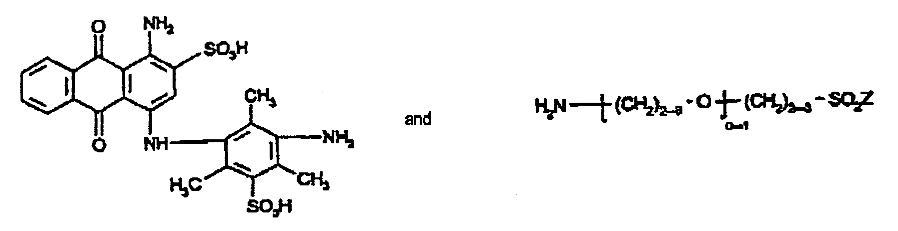 are reacted with cyanuric chloride.

7. Process for dyeing or printing of natural or synthetic polyamide fibre materials, wherein a dye of the formula (24), (25) or (26) is used.

8. Process according to Claim 7 for dyeing or printing natural polyamide fibre materials.

## Revendications

1. Colorants anthraquinoniques réactifs sur la fibre de formule 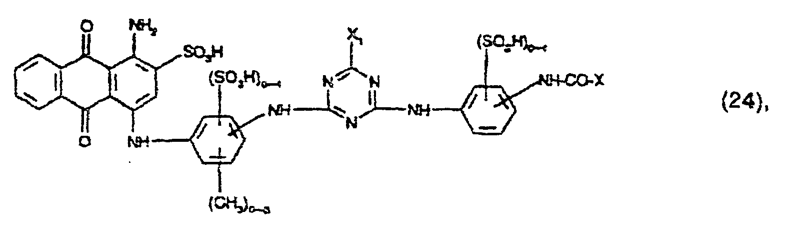 dans laquelle
X₁ représente un atome de chlore et
X représente le radical 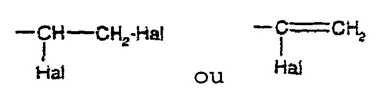 et Hal représente un atome de brome ou de chlore,
et le colorant de formule (24) contient au total deux groupes sulfo, 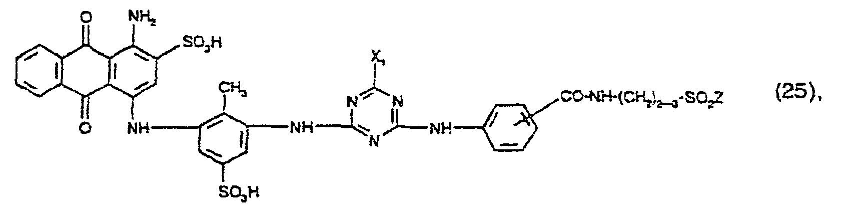 où X₁ représente un atome de chlore et
Z représente le radical -CH=CH₂ ou -CH₂-CH₂-Y et Y représente -Cl, -OSO₃H ou -OCO-CH₃, et 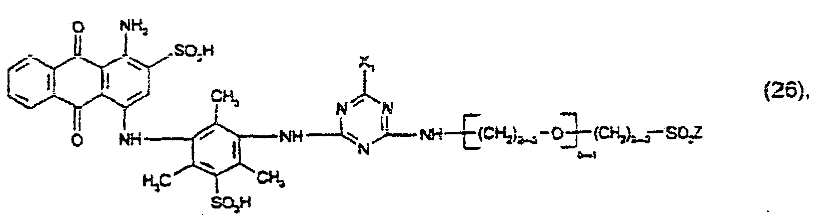 où X₁ représente un atome de chlore et
Z représente le radical -CH=CH₂ ou -CH₂-CH₂-Y et Y représente -C1, -OSO₃H ou -OCO-CH₃.

2. Colorants anthraquinoniques selon la revendication 1, **caractérisés en ce que** Hal représente un atome de brome.

3. Colorants anthraquinoniques selon la revendication 1 ou 2, **caractérisés en ce que** Y représente -Cl ou -OSO₃H, en particulier -OSO₃H.

4. Procédé pour la préparation d'un colorant de formule (24) **caractérisé en ce qu'**on fait réagir des composés de formules 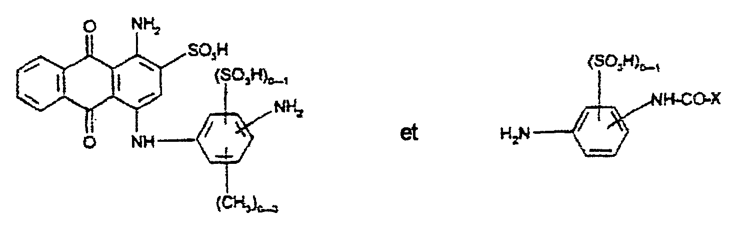 avec le chlorure de cyanuryle.

5. Procédé pour la préparation d'un colorant de formule (25) **caractérisé en ce qu'**on fait réagir des composés de formules 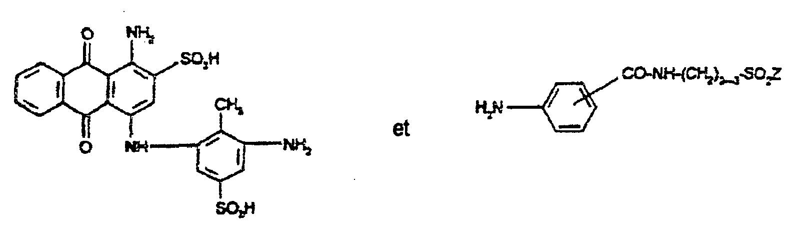 avec le chlorure de cyanuryle.

6. Procédé pour la préparation d'un colorant de formule (26) **caractérisé en ce qu'**on fait réagir des composés de formules 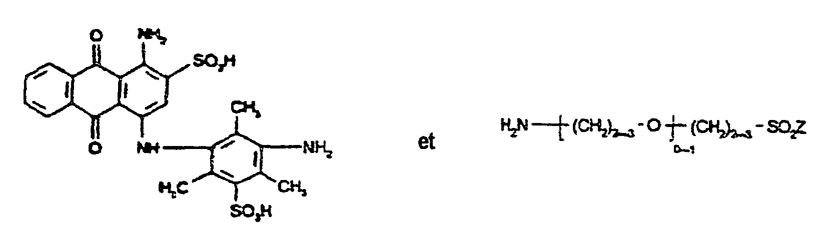 avec le chlorure de cyanuryle.

7. Procédé pour la teinture ou l'impression de matières fibreuses polyamides naturelles ou synthétiques où l'on utilise un colorant de formule (24), (25) et (26).

8. Procédé selon la revendication 7, pour la teinture ou l'impression de matières fibreuses polyamides naturelles.
